(19) Europäisches Patentamt

European Patent Office

Office européen des brevets

(11) **EP 4 262 160 A1**

(12) **EUROPEAN PATENT APPLICATION**
published in accordance with Art. 153(4) EPC

(43) Date of publication:
**18.10.2023  Bulletin 2023/42**

(21) Application number: **21914182.7**

(22) Date of filing: **24.12.2021**

(51) International Patent Classification (IPC):
**H04L 12/50** *(2006.01)*

(52) Cooperative Patent Classification (CPC):
**H04L 12/50; H04L 27/00; H04L 45/30**

(86) International application number:
**PCT/CN2021/141089**

(87) International publication number:
**WO 2022/143445 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.12.2020  CN 202011628010**

(71) Applicant: **Huawei Technologies Co., Ltd.**
**Shenzhen, Guangdong 518129 (CN)**

(72) Inventor: **WU, Feng**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **BASEBAND DATA TRANSMISSION METHOD AND SYSTEM**

(57)    A baseband data transmission method and system are provided. The system includes a first sending path and a second sending path that have different performance indicators. A first switching unit selects an output of one of the sending paths based on a type of a to-be-transmitted data packet, and sends the output to a sender. In this way, when there is to-be-transmitted data of a plurality of different types, the output of the appropriate sending path may be selected by using the first switching unit without rebooting the data transmission system or performing link renegotiation, so that hybrid transmission of data packets of a plurality of types in the system is implemented.

FIG. 6

**Description**

**TECHNICAL FIELD**

This application relates to the field of communication technologies, and in particular, to a baseband data transmission method and system.

**BACKGROUND**

There are a large quantity of high-speed interconnection interfaces in a modern computer and a wired communication system. Baseband transmission is used for the high-speed interconnection interface, that is, data transmission is performed without carrier modulation. This is different from a wireless communication system. Because there is a variety of noise in a sender, a receiver, and a channel of data, a transmitted signal is distorted, and consequently a bit error is caused on a receiver side. A higher frequency indicates a lower signal-to-noise ratio and a higher bit error rate. Therefore, a transmission bandwidth of the signal cannot be excessively high. However, with development of technologies, an increasingly high bandwidth requirement and an increasingly low delay requirement are imposed on the high-speed interconnection interface. An existing NRZ modulation technology has a low delay but a low bandwidth, and a PAM4 modulation technology has a high bandwidth but a high delay.

**SUMMARY**

Embodiments of this application provide a baseband data transmission method and system, to select, based on types of to-be-transmitted data packets, sending paths having different performance indicators, thereby satisfying requirements of the to-be-transmitted data packets.

This application discloses a baseband data transmissionsystem, including: a first switching unit, a first sending path, a second sending path, and a sender, where the first sending path and the second sending path are disposed in parallel, and the first sending path and the second sending path have different performance indicators; the first sending path is configured to modulate a to-be-transmitted data packet, and sending a modulated output to the first switching unit; the second sending path is configured to modulate the to-be-transmitted data packet, and sending a modulated output to the first switching unit; and the first switching unit is configured to connect to the first sending path and the second sending path, and select the output of the first sending path or the second sending path based on a type of the to-be-transmitted data packet.

The system disclosed in this embodiment of this application includes the first sending path and the second sending path that have the different performance indicators. The first switching unit selects the output of one of the sending paths based on the type of the to-be-transmitted data packet, and sends the output to the sender. In this way, when there is to-be-transmitted data of a plurality of different types, the output of the appropriate sending path may be selected by using the first switching unit without rebooting the data transmission system or performing link renegotiation, so that hybrid transmission of data packets of a plurality of types in the system is implemented.

It should be noted that, that the first switching unit selects the output of one of the sending paths based on the type of the to-be-transmitted data packet means enabling a connection between the selected sending path and the sender.

In a possible implementation, the first sending path and the second sending path are specifically configured to modulate the to-be-transmitted data packet, and output modulated data and modulation types.

In another possible implementation, the system further includes a receiver, an analysis unit, a first receiving path, a second receiving path, and a third switching unit, where the first receiving path and the second receiving path are disposed in parallel;

> the analysis unit is configured to receive an output from the receiver, extract the modulation type of the modulated data, and send the modulation type to the third switching unit;
> the first receiving path and the second receiving path are configured to demodulate the modulated data; and
> the third switching unit is configured to connect to the first receiving path and the second receiving path, and select an output of the first receiving path or the second receiving path based on the modulation type.

The data modulated by the sending paths carries the modulation types. After a receiving side receives the modulated data, the receiving paths demodulate the modulated data, and the third switching unit selects an appropriate receiving path based on the modulation type to enable, and uses an output of the receiving path as a final output, so that a modulation path that satisfies the modulation type is correctly identified on the receiving side.

In a possible implementation, the performance indicator of the sending path includes at least one of the following: a delay, a bit error rate, a bandwidth, and power consumption.

The system may further include a second switching unit, configured to receive the to-be-transmitted data packet, and select a sending path based on the type of the to-be-transmitted data packet.

Before the sending path, a sending side may further include the second switching unit, configured to select the sending path based on the type of the to-be-transmitted data packet, to avoid sending data on both the first sending path and the second sending path, so that system power consumption is reduced.

It should be noted that, when the sending side does not include the second switching unit, the to-be-transmitted data packet may be transmitted on both the first sending path and the second sending path. In this case, the first switching unit may correctly select, based on the type of the to-be-transmitted data packet, the appropriate path to receive the modulated data.

When the to-be-transmitted data packet is a short packet having a low-delay requirement, the first switching unit sends the to-be-transmitted data packet to the first sending path;

when the to-be-transmitted data packet is a long packet having a low-delay requirement, the first switching unit divides the data packet into first data and second data, sends the first data to the first sending path, and sends the second data to the second sending path; or

when the to-be-transmitted data packet is a data packet having a high-bandwidth requirement, and has no delay requirement, the first switching unit sends the to-be-transmitted data packet to the second sending path.

The first data is an operation instruction, and the second data is to-be-operated data.

A length m of the first data satisfies:

$m < n + 2BR*T$, where

T is a codec delay, BR is a bitrate of a first modulator, and n is a quantity of bits of check data of an error correction encoder.

When the length of the first data satisfies the foregoing condition, performance is better by using the first sending path for sending.

In another possible implementation, the system may further include a fourth switching unit on a receiving side, configured to receive the output of the receiver, and select a receiving path based on the modulation type.

The first sending path includes the first modulator, and the second sending path includes a second modulator.

A bit error rate of the first modulator is less than a bit error rate of the second modulator, a delay of the first sending path is less than a delay of the second sending path, and a bandwidth of the second modulator is greater than a bandwidth of the first modulator.

A voltage difference between adjacent levels output by the first modulator is greater than a voltage difference between adjacent levels output by the second modulator.

A level output by the first modulator is a subset of a level output by the second modulator. It should be noted that a level output by the first modulator may alternatively not be a subset of a level output by the second modulator. For example, levels used for the first modulator are two levels at a largest interval in PAM6 modulation, and levels used for the second modulator are four levels in the middle in the PAM6 modulation.

In a possible implementation, the first modulator is a non-return-to-zero NRZ modulator, the second modulator is a 4 pulse amplitude modulation PAM4 modulator, the sender is a PAM4 sender, and the receiver is a PAM4 receiver.

A first demodulator on the first receiving path is an NRZ demodulator, and a second demodulator on the second receiving path is a PAM4 demodulator, where the NRZ demodulator is configured to receive a data packet from the receiver, and output, with a granularity of two bits, a high-order bit in every two bits as a demodulation output result.

A type parameter of the data packet includes at least one of the following: a bandwidth parameter, a delay parameter, and a length parameter.

According to a second aspect, an embodiment of this application further provides a baseband data transmission method, applied to a baseband data transmission system, where the system includes a first switching unit, a first sending path, a second sending path, and a sender, the first sending path and the second sending path are disposed in parallel, and the first sending path and the second sending path have different performance indicators.

The method includes: The first sending path modulates a to-be-transmitted data packet, and sends a modulated output to the first switching unit. The second sending path modulates the to-be-transmitted data packet, and sends a modulated output to the first switching unit. The first switching unit connects to the first sending path and the second sending path, and selects the output of the first sending path or the second sending path based on a type of the to-be-transmitted data packet.

In a possible implementation, the first sending path and the second sending path modulate the to-be-transmitted data packet, and output modulated data and modulation types.

In another possible implementation, the system further includes a receiver, an analysis unit, a first receiving path, a second receiving path, and a third switching unit, where the first receiving path and the second receiving path are disposed in parallel.

The method further includes: The analysis unit receives an output from the receiver, extracts the modulation type of the modulated data, and sends the modulation type to the third switching unit. The first receiving path and the second receiving path demodulate the modulated data. The third switching unit connects to the first receiving path and the second receiving path, and selects an output of the first receiving path or the second receiving path based on the modulation type.

Optionally, the system further includes a second switching unit, and the method further includes:

The second switching unit receives the to-be-transmitted data packet, and selects a sending path based on the type of the to-be-transmitted data packet.

When the to-be-transmitted data packet is a short packet having a low-delay requirement, the first switching unit sends the to-be-transmitted data packet to the first sending path;

when the to-be-transmitted data packet is a long packet having a low-delay requirement, the first switching unit divides the to-be-transmitted data packet into first data and second data, sends the first data to the first sending path, and sends the second data to the second sending path; or

when the to-be-transmitted data packet is a data packet having a high-bandwidth requirement, and has no delay requirement, the first switching unit sends the to-be-transmitted data packet to the second sending path.

Optionally, the system further includes a fourth switching unit, and the method further includes: The fourth switching unit receives the output of the receiver, and selects a receiving path based on the modulation type.

According to the baseband data transmission method disclosed in embodiments of this application, the first switching unit selects the output of one of the sending paths based on the type of the to-be-transmitted data packet, and sends the output to the sender. In this way, when there is to-be-transmitted data of a plurality of different types, the output of the appropriate sending path may be selected by using the first switching unit without rebooting the data transmission system or performing link renegotiation, so that the hybrid transmission of the data packets of the plurality of types in the system is implemented.

**BRIEF DESCRIPTION OF DRAWINGS**

FIG. 1 is a schematic diagram of a signal in NRZ modulation according to an embodiment of this application;

FIG. 2 is a schematic diagram of a signal in PAM4 modulation according to an embodiment of this application;

FIG. 3 is a schematic diagram of a total delay of data transmission according to an embodiment of this application;

FIG. 4 is a schematic diagram of comparison between a total delay of transmitting a data packet by using NRZ modulation and a total delay of transmitting the data packet by using PAM4 modulation according to an embodiment of this application;

FIG. 5 is a schematic diagram of delay comparison between hybrid modulation, NRZ modulation, and PAM4 modulation according to an embodiment of this application;

FIG. 6 is a schematic diagram of a structure of a data transmission system according to an embodiment of this application;

FIG. 7 is a schematic flowchart of a data transmission method according to an embodiment of this application; and

FIG. 8 is a schematic flowchart of another data transmission method according to an embodiment of this application.

**DESCRIPTION OF EMBODIMENTS**

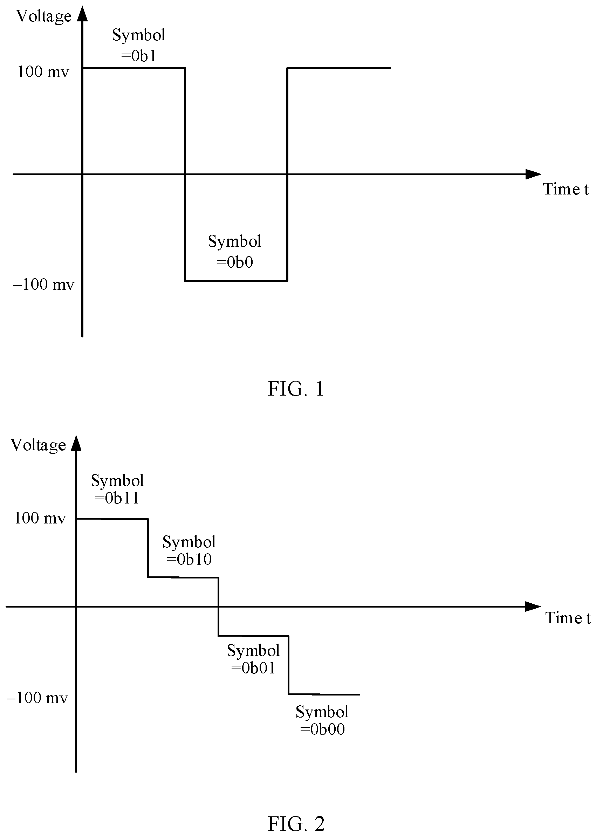

FIG. 1 is a schematic diagram of a signal in non-return-to-zero (non-return-to-zero, NRZ) modulation in a conventional technology. In the NRZ modulation, sending is performed in a form of a symbol (symbol). Each symbol has only one bit. When bit=1 and bit=0, different levels are used respectively. For example, if bit=1, 100 mV is output; or if bit=0, -100 mV is output. A voltage interval between two signal levels is large, and a bit error rate is low. Generally, error correction encoding does not need to be added for the NRZ modulation. Therefore, a delay of the NRZ modulation is low, but a bandwidth of the NRZ modulation is low.

FIG. 2 is a schematic diagram of a signal of 4 pulse amplitude modulation (4 Pulse Amplitude Modulation, PAM4) modulation in a conventional technology. In the PAM4 modulation, sending is performed in a form of a symbol. Each symbol has two bits, where bits=00, 01, 10, or 11. In PAM4, four levels (0, 1, 2, and 3) are respectively used, and correspond to four different voltages. For example, if bits=11, 100 mV is output; if bits=10, 33 mV is output; if bits=01, -33 mV is output; and if bits=00, -100 mV is sent. A bitrate of the PAM4 modulation is twice that of NRZ. However, because a voltage interval between adjacent levels of PAM4 is significantly smaller compared with that of the NRZ modulation (where for example, the voltage interval of NRZ in FIG. 1 is 200 mV, but the voltage interval of PAM4 in FIG. 2 is 66 mV), PAM4 has a poor anti-interference capability and a higher bit error rate. Therefore, when the PAM4 modulation is used, error correction encoding (for example, forward error correction (Forward Error Correction, FEC)) needs to be added, to reduce the bit error rate. Because error correction data needs to be added to improve an error correction capability, channel utilization of PAM4 is lower. For example, when a 320-byte check bit is added to every 5120 bytes of data, channel utilization is approximately 94%. In addition, both error correction encoding at a sending end and error correction decoding at a receiving end need time overheads. Therefore, a transmission delay is increased.

In the conventional technology, the NRZ modulation and the PAM4 modulation cannot satisfy requirements for a low delay and a high bandwidth, and switching between the NRZ modulation and the PAM4 modulation cannot be implemented.

Embodiments of this application provide a data transmission method, apparatus, and system, to better satisfy requirements for a low delay and a high bandwidth of baseband signal transmission.

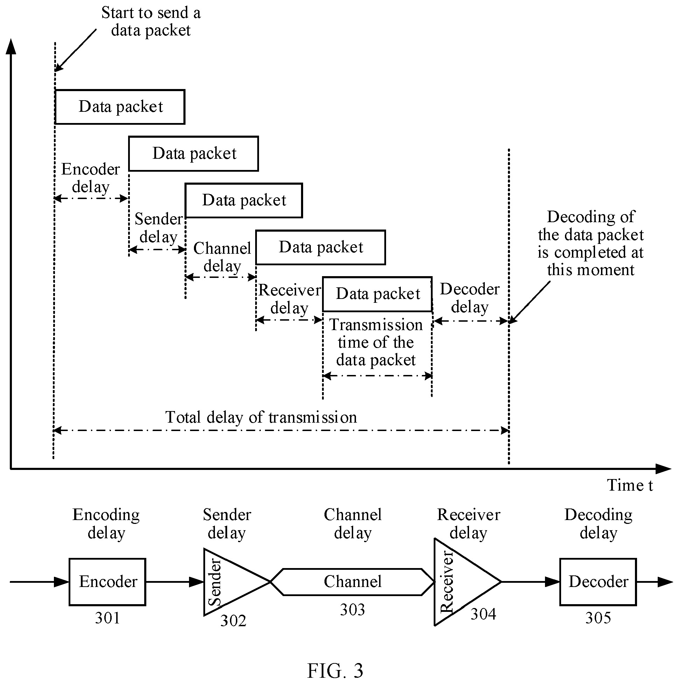

To describe beneficial effects of the solutions more clearly, as shown in FIG. 3, an embodiment of this application provides a schematic diagram of a total delay of data transmission. When a PAM4 modulation technology is used, a data packet needs to pass through an encoder 301, a sender 302, a channel 303, a receiver 304, and a decoder 305, and the decoder restores the received data packet. An encoder delay, a sender delay, a channel delay, a receiver delay, and a decoder delay are introduced in the foregoing process.

When the PAM4 modulation technology is used, a total delay of transmission of the data packet is a sum of the foregoing encoder delay, sender delay, channel delay, receiver delay, and decoder delay, and transmission time of the data packet.

When NRZ modulation is used, no encoder or decoder is needed, and delays introduced in a data transmission process are a sender delay, a channel delay, and a receiver delay. Therefore, a total delay of transmission of the data packet depends on the foregoing delays introduced in a data packet sending process and transmission time of the data packet.

For ease of description, a sum of the sender delay, the channel delay, and the receiver delay may be referred to as a basic delay, and the encoder delay and the decoder delay may be referred to as a codec delay.

An embodiment of this application provides a method for simulating an NRZ sender by using a PAM4 sender. For example, the PAM4 sender may use only two levels, namely, level 0 and level 3 (for example, 0b11 and 0b00 in FIG. 2), that have a largest voltage interval in four levels of PAM4 symbols, to simulate the NRZ sender. In this case, because the voltage interval between the two levels is large, and a bit error rate is low, error correction encoding may not be used, so that a codec delay is avoided. In addition, because only the two levels that have the largest voltage interval are used to transmit a data stream, a transmission bandwidth is only half of that of the PAM4 sender.

When a virtual NRZ sender is implemented by using the PAM4 sender, the two levels that have a largest voltage difference are used, and one bit is sent for each symbol. In this case, the voltage difference between the two levels of the virtual NRZ sender is the same as that of a conventional NRZ sender. When PAM4 implements the virtual NRZ sender, only level 0 and level 3 are sent. On a receiving side, an NRZ demodulator determines a received level, and restores a binary data stream. If the received level is 0 or 1, and two corresponding bits are 00/01, the NRZ demodulator selects a high-order bit in the two bits, to determine that 0 is received. If the received level is 2 or 3, and two corresponding bits are 11/10, the NRZ demodulator selects a high-order bit in the two bits, to determine that 1 is received. Even if level 3 sent by the virtual NRZ sender is presented as level 2 on a receiver side due to impact such as a channel noise, the NRZ demodulator can still determine correct data.

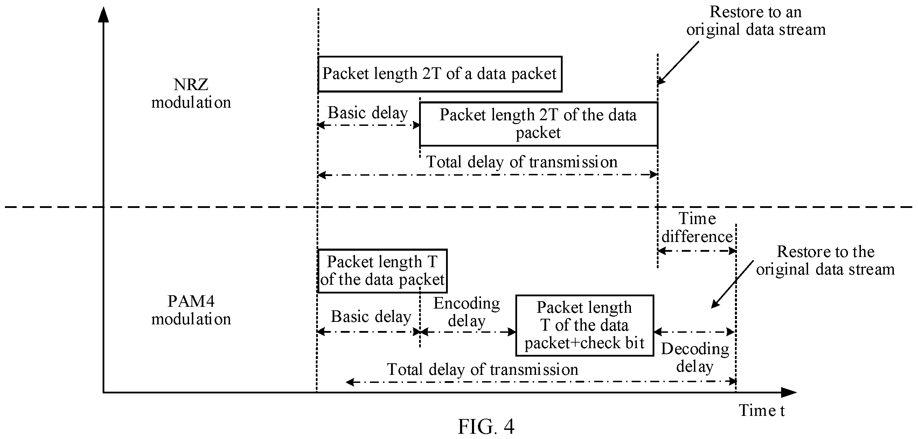

FIG. 4 is a schematic diagram of comparison between a total delay of transmitting a data packet by using NRZ modulation and a total delay of transmitting the data packet by using PAM4 modulation according to an embodiment of the present invention. For a to-be-sent data packet (m bits), when PAM4 is used to modulate the data packet, error correction encoding needs to be performed on the to-be-sent data packet, to add n bits of check data, and a generated to-be-sent data packet is m+n bits; or when virtual NRZ modulation provided in this embodiment of this application is used, because error correction encoding does not need to be performed on the data packet, the to-be-sent data packet is still m bits. It is assumed that a bitrate of PAM4 is 2BR (bitrate), and a bitrate of NRZ is BR. As shown in an upper half part of FIG. 4, when the virtual NRZ modulation is implemented by using PAM4 in this embodiment of this application, a total delay of completing transmission of the data packet is a sum of a basic delay and transmission time of the data packet, where the transmission time of the data packet is m/BR. As shown in a lower half part of FIG. 4, the PAM4 modulation is used for the data packet in this embodiment of this application, and a total delay of completing transmission of data is a sum of a basic delay, a codec delay, and transmission time of the data packet. In this case, the transmission time of the data packet is (m+n)/2BR.

It is assumed that the codec delay is T. When a length m of the to-be-sent data packet satisfies the following condition, the total delay of sending the data packet by using the virtual NRZ modulation is less than the total delay of sending the data packet by using the PAM4 modulation:

$$m<n+2BR*T.$$

n+2BR*T is used as a preset threshold. When a quantity of bits of the to-be-sent data packet is less than the preset threshold, the to-be-sent data packet may be classified as a short packet. When a quantity of bits of the to-be-sent data packet is greater than the preset threshold, the to-be-sent data packet is classified as a long packet. It may be understood that, in a specific implementation scenario, a value of the preset threshold may be less than n+2BR*T. In this case, a short packet can be distinguished more accurately, so that data transmission efficiency is improved.

For example, when Codec delay T=10 ns, and Bit rate n/m=3% (56G PAM4), provided that valid data m is less than 543 bits and a total packet length m+n is less than 560 bits, a total delay of transmission using virtual NRZ is less than that of transmission using PAM4, and a receiving side may obtain a complete data packet earlier.

In embodiments of this application, type parameters of a packet include a bandwidth parameter, a delay parameter, and a length parameter. The bandwidth parameter indicates whether a to-be-sent data packet has a high-bandwidth requirement, the delay parameter indicates whether the to-be-sent data packet has a low-delay requirement, and the length parameter indicates a length of the to-be-sent data packet. In a possible implementation, in embodiments of this application, to-be-sent packets are classified into a delay-sensitive short packet, a delay-sensitive long packet, and a bandwidth-sensitive packet (which may be a long packet or a short packet).

As shown in the following table, embodiments of this application provide a modulation scheme selection mechanism. An appropriate modulation scheme is selected based on a type of a to-be-sent data packet and depending on whether there are high-bandwidth and low-delay requirements.

**Table 1**

| Whether a high bandwidth is required | Whether a low delay is required | Packet length | Modulation scheme |
| --- | --- | --- | --- |
| Yes | No | Unlimited | PAM4 |
| No | Yes | Unlimited | Virtual NRZ |
| Yes | Yes | Short | Virtual NRZ |
| Yes | Yes | Long | Virtual NRZ+PAM4 |

In embodiments of this application, a PAM4 sender is used to use different PAM4 level selection solutions for three types of packets, to implement hybrid modulation of PAM4 and virtual NRZ, and the modulation scheme can be switched in real time.

Further, a modulation type is added to a packet header of a data packet generated through modulation. When the modulation scheme is hybrid modulation of virtual NRZ and PAM4, a data size of the virtual NRZ modulation is further added to the packet header. For example, embodiments of this application provide a data packet format, including a modulation type identifier, an NRZ length parameter, and a payload. For example, a modulation type identifier 0b 111000 indicates the virtual NRZ modulation, a modulation type identifier 0b000111 indicates the PAM4 modulation, and a modulation type identifier 0b 111111 indicates the hybrid modulation. When the modulation scheme is the hybrid modulation, the NRZ length parameter carries a data packet size of the NRZ modulation. Data packets generated in the foregoing three modulation schemes may be sent on a link in a hybrid manner. A receiving side determines, based on the modulation type identifier and the NRZ length parameter in the packet header, data on which NRZ modulation is performed or data on which PAM4 modulation is performed.

In another possible implementation, a modulation type may be carried in a control packet that does not include a payload, and indicate a modulation type and a length of a data packet after the control packet.

In still another possible implementation, a modulation type may be carried in a header of a modulated data packet, and indicate a modulation type and a length of the data packet. Further, either of NRZ modulation and PAM4 modulation may be used as a default modulation scheme, and modulated data output in the default modulation scheme does not carry a modulation type. A data packet output in a non-default modulation scheme carries a modulation type and a data length, so that the non-default modulation scheme and the default modulation scheme can be distinguished from each other.

Specifically, the delay-sensitive long packet is sent in a hybrid modulation scheme, and the NRZ length parameter is for distinguishing which parts of the data packet use the NRZ modulation and which parts use the PAM4 modulation.

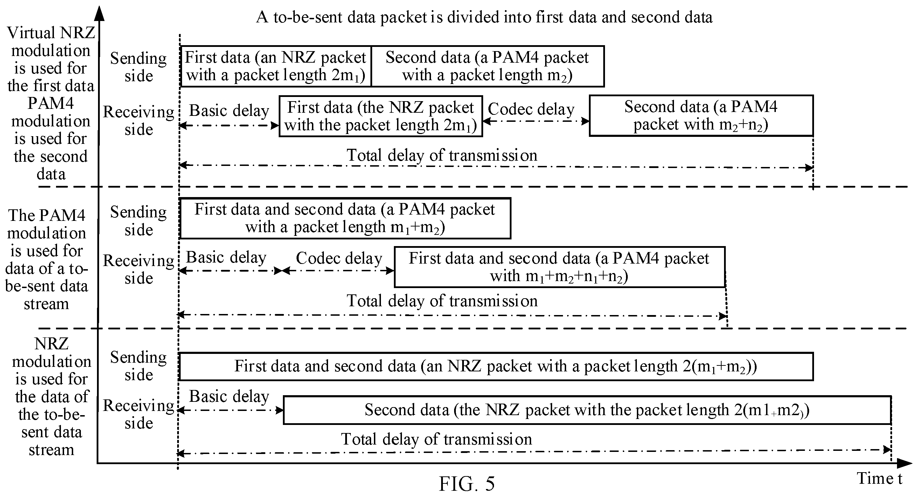

FIG. 5 is a schematic diagram of delay comparison between hybrid modulation, NRZ modulation, and PAM4 modulation according to an embodiment of this application. In this embodiment of this application, a hybrid modulation scheme is used. Along packet is divided into two parts: first data and second data. Virtual NRZ modulation is used for the first data, and the PAM4 modulation is used for the second data, where a size of the first data is less than the foregoing preset threshold. FIG. 5 further shows a delay of the hybrid modulation, a delay of the conventional NRZ modulation, and a delay of the PAM4 modulation. Specifically, it is assumed that, a packet length of a generated data packet is 2mi when the NRZ modulation is used for the first data, and a packet length of a generated data packet is $2m_2$ when the NRZ modulation is used for the second data. Correspondingly, a packet length of a generated data packet is $m_1+n_1$ when the PAM4 modulation is used for a first data packet, where m is check data; and a packet length of a generated data packet is $m_2+n_2$ when the PAM4 modulation is used for a second data packet. It can be learned from the comparison in FIG. 5 that the hybrid modulation in this embodiment of this application can implement transmission of the first data in short time. A transmission delay of the first data is lower compared with that in the standard PAM4 modulation scheme, and a hybrid modulation scheme has a higher bandwidth compared with that in the standard NRZ modulation scheme.

In a possible implementation, in the hybrid modulation scheme, the first data may be an operation instruction, and the second data may be to-be-operated data. In this case, the operation instruction may be sent to a receiving side with a low delay in a virtual NRZ scheme. After receiving the operation instruction, the receiving side may need to perform another preparation operation used as a basis for subsequent processing of the to-be-operated data. In this scenario, the hybrid modulation scheme more efficiently uses time for performing the preparation operation by the receiving side, and efficiency is higher.

For the bandwidth-sensitive packet, according to the standard PAM4 modulation scheme, all four levels of PAM4 symbols are used, to implement high-bandwidth transmission.

In conclusion, according to a hybrid modulation technology provided in this embodiment of this application, for transmission of a short packet, a low delay can be implemented, and data transmission can be completed in shorter time; and for transmission of a long packet, high-bandwidth and low-delay requirements can be satisfied.

Specifically, upper-layer software may indicate, by carrying the foregoing type parameters of the data packet in the to-be-sent data packet, a modulation scheme that needs to be used, or may indicate, by invoking different application programming interfaces (Application Programming Interfaces) APIs, a modulation scheme that needs to be used, and may use three types of APIs, for example, a high-bandwidth transmission API, a low-delay transmission API, and a hybrid-mode API, to correspond to the foregoing three types of data packets respectively.

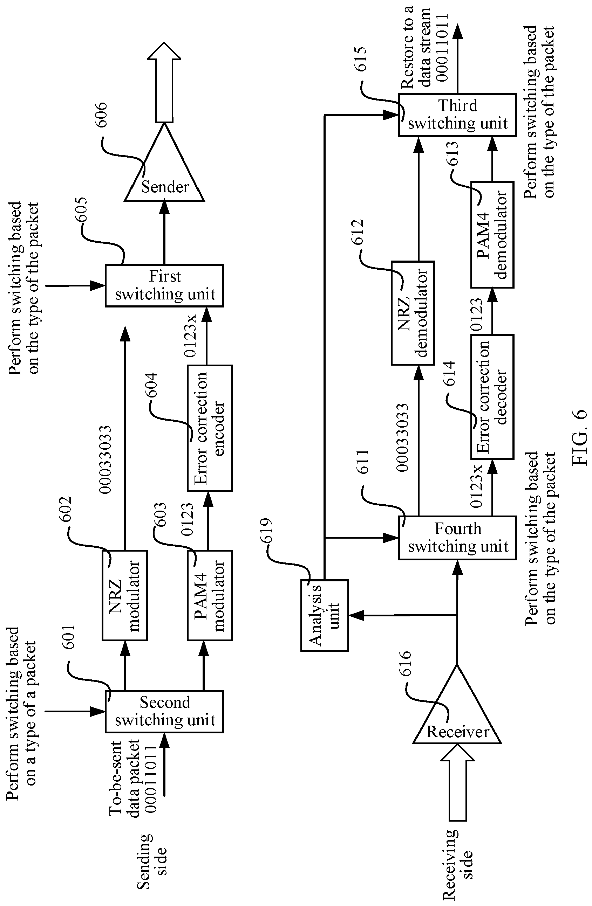

FIG. 6 is a schematic diagram of a structure of a baseband data transmission system according to an embodiment of this application. The data transmission system includes a sending side and a receiving side. The sending side includes a second switching unit 601, an NRZ modulator 602, a PAM4 modulator 603, an error correction encoder 604, a first switching unit 605, and a PAM4 sender 606. The receiving side includes a PAM4 receiver 616, an analysis unit 619, a fourth switching unit 611, an NRZ demodulator 612, a PAM4 demodulator 613, an error correction decoder 614, and a third switching unit 615.

A sending path on which the NRZ modulator 602 is located may be a first sending path, a sending path on which the PAM4 modulator is located may be a second sending path, the first sending path and the second sending path are disposed in parallel, and the first sending path and the second sending path have different performance indicators. The first sending path and the second sending path modulate a to-be-transmitted data packet, and send modulated outputs to the first switching unit 605. The first switching unit 605 connects to the first sending path and the second sending path, and selects the output of the first sending path or the second sending path based on a type of the to-be-transmitted data packet.

The system disclosed in this embodiment of this application includes the first sending path and the second sending path that have the different performance indicators. The first switching unit selects the output of one of the sending paths based on the type of the to-be-transmitted data packet, and sends the output to the sender. In this way, when there is to-be-transmitted data of a plurality of different types, the output of the appropriate sending path may be selected by using the first switching unit without rebooting the data transmission system or performing link renegotiation, so that hybrid transmission of data packets of a plurality of types in the system is implemented.

Correspondingly, a receiving path on which the NRZ demodulator 612 is located is a first receiving path, a receiving path on which the PAM4 demodulator 613 is located is a second receiving path, and the first receiving path and the second receiving path are disposed in parallel. The analysis unit 619 is configured to receive an output from the receiver 616, extract a modulation type of modulated data, and send the modulation type to the third switching unit 615.

The first receiving path and the second receiving path configured to demodulate the modulated data.

The third switching unit 615 is configured to connect to the first receiving path and the second receiving path, and select an output of the first receiving path or the second receiving path based on the modulation type.

A bit error rate of the NRZ modulator 602 is less than a bit error rate of the PAM4 modulator 603, a delay of the first sending path is less than a delay of the second sending path, and a bandwidth of the PAM4 modulator 603 is greater than a bandwidth of the NRZ modulator 602.

A voltage difference between adjacent levels output by the NRZ modulator 602 is greater than a voltage difference between adjacent levels output by the PAM4 modulator 603.

A level output by the NRZ modulator 602 is a subset of a level output by the PAM4 modulator 603. It should be noted that, when modulators on the first sending path and the second sending path are modulators of another type, a level output by the modulator on the first sending path may alternatively not be a subset of a level output by the modulator on the second sending path. For example, levels used for a first modulator are two levels at a largest interval in PAM6 modulation, and levels used for a second modulator are four levels in the middle in the PAM6 modulation.

A SerDes (Serializer-Deserializer) interface is used between the sender 606 and the receiver 616.

In a possible implementation, the first sending path may further include another error correction encoder (not shown in the figure). Correspondingly, the first receiving path includes another corresponding error correction decoder. Performance of the modulator and the encoder on the first sending path jointly determines a performance indicator of the first sending path. For example, the first sending path may be a low-delay path, and the second sending path is a high-bandwidth path. The performance indicator includes at least one of the following: a delay, a bit error rate, a bandwidth, and power consumption.

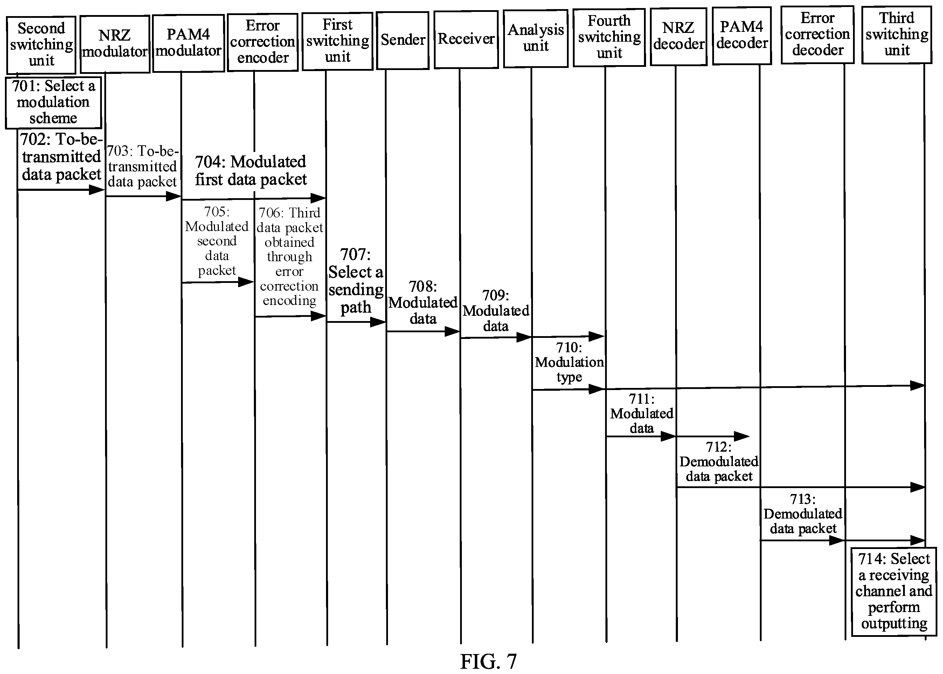

Corresponding to FIG. 6, as shown in FIG. 7, an embodiment of this application further provides a schematic flowchart of a data transmission method. The method includes the following steps:

Step 701: A second switching unit receives a to-be-sent data packet, and selects a modulation scheme based on a type of the data packet with reference to the foregoing Table 1. For a process of selecting the modulation scheme, refer to the descriptions in the foregoing embodiment. Details are not described herein again.

For example, the to-be-sent data packet is 00011011.

Step 702: When it is determined that NRZ modulation needs to be performed on the data packet, the second switching unit sends the data packet to an NRZ modulator, and step 704 is performed.

Step 703: When it is determined that PAM4 modulation needs to be performed on the data packet, the second switching unit sends the data packet to a PAM4 modulator, and step 705 is performed.

The second switching unit includes routing logic, and enables, based on the determined modulation scheme, a path that matches the modulation scheme.

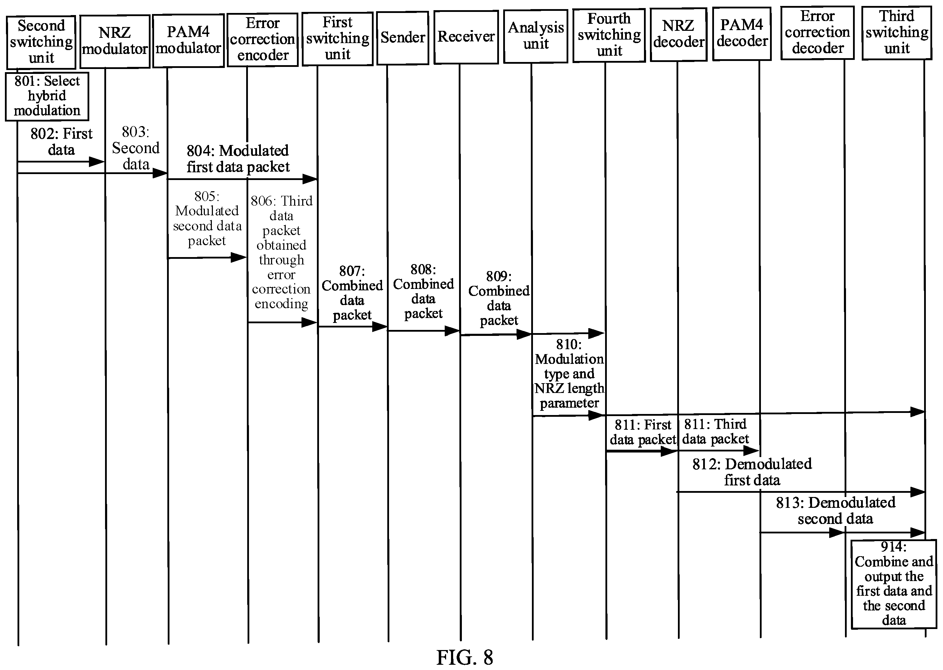

When it is determined that hybrid modulation needs to be performed on the data packet, for a procedure of a hybrid modulation method, refer to an embodiment corresponding to FIG. 8.

It should be noted that, in a possible implementation, the second switching unit is optional. When a baseband data transmission system does not include the second switching unit, the data packet may be transmitted on both a first sending path on which the NRZ modulator is located and a second sending path on which PAM4 modulator is located. A first switching unit selects a sending path based on the type of the data packet, and enables the sending path corresponding to the type of the data packet, thereby sending an output of the selected sending path to a sender.

When the baseband data transmission system includes the second switching unit, a sending path that is not selected may be disabled based on a selection result in step 701, so that power consumption can be further reduced.

Step 704: The NRZ modulator modulates the data packet to generate a modulated first data packet.

The modulated data packet carries the foregoing packet header structure and a payload, and the packet header structure includes a modulation type identifier and an NRZ length parameter. For example, a level of an electrical signal corresponding to all bits in the payload of the modulated data packet is 00033033. The NRZ length parameter is optional.

Step 705: The PAM4 modulator modulates the data packet to generate a modulated second data packet, and sends the second data packet to an error correction encoder.

The modulated data packet carries the foregoing header structure and a payload. For example, a level of an electrical signal corresponding to all bits in the payload of the modulated data packet is 0123. Because the PMA4 modulation is used in this case, an NRZ length parameter is optional, and a value may be null.

Step 706: The error correction encoder performs error correction encoding on the second data packet, to add check data x and generate a third data packet, where a modulation type identifier and an NRZ length parameter of the third data packet are the same as those of the second data packet, and a level of an electrical signal corresponding to all bits in a payload of the third data packet is 0123x.

Step 707: The first switching unit selects a sending path based on the type of the data packet, and sends the first data packet or the third data packet to a PAM4 sender.

Specifically, the first switching unit and the second switching unit may implement similar processing logic. When an encoding scheme corresponding to the type of the data packet is NRZ encoding, the first switching unit selects a first sending path, and sends a modulated bit stream generated by the NRZ modulator to the PAM4 sender. When an encoding scheme corresponding to the type of the data packet is PAM4 encoding, the first switching unit selects a second sending path, and sends a modulated bit stream generated by the PAM4 modulator to the PAM4 sender.

A format of data generated through modulation is the format in the foregoing embodiment. Details are not described in this embodiment again.

Step 708: The PAM4 sender sends the first data packet or the third data packet to a PAM4 receiver through a channel.

Step 709: The PAM4 receiver sends the data packet received from the channel to an analysis unit and a fourth switching unit.

Step 710: The analysis unit analyzes the packet header of the data packet, obtains the modulation type of the data packet, and notifies a third switching unit and the fourth switching unit of the modulation type.

The analysis unit on a receiving side may be combined into the fourth switching unit. The fourth switching unit implements two functions: packet analysis and connection switching.

It should be noted that, in a possible implementation, the fourth switching unit is optional. When the baseband data transmission system does not include the fourth switching unit, the receiver sends received modulated data to a first receiving path and a second receiving path separately, and the two receiving paths demodulate the modulated data separately. In this case, the third switching unit selects an appropriate receiving path based on the modulation type, that is, enables the selected receiving path, and outputs data demodulated by the receiving path, to obtain the original data packet.

When the baseband data transmission system includes the fourth switching unit, a receiving path that is not selected may be disabled, to reduce system power consumption.

Step 711: The fourth switching unit sends the data packet to an NRZ demodulator based on the modulation type of the data packet, and step 712 is performed; or the fourth switching unit sends the data packet to a PAM4 demodulator based on the modulation type of the data packet, and step 713 is performed.

For example, when the modulation type of the data packet is the NRZ modulation, a level of an electrical signal corresponding to all bits in the payload of the data packet is 00033033, and a corresponding binary data stream is 0000001111001111; or when the modulation type of the data packet is the PAM4 modulation, a level of an electrical signal corresponding to all bits in the payload of the data packet is 0123x.

Step 712: An NRZ demodulator demodulates the received data packet, and outputs the demodulated data packet.

For example, in this case, the NRZ demodulator selects a high-order bit in every two bits for output, and the demodulated data packet is 00011011.

Step 713: The PAM4 decoder decodes the data, an error correction decoder performs error correction decoding, outputs the decoded data packet, and sends the decoded data packet to a PAM4 demodulator, and the PAM4 demodulator outputs the demodulated data packet.

For example, a level of an electrical signal corresponding to all bits in a payload of the decoded data packet is 0123. The demodulated data packet output by the PAM4 demodulator is 00011011.

Step 714: The third switching unit selects the first receiving path or the second receiving path based on the modulation type sent by the analysis unit, to output the data packet from the NRZ demodulator or the PAM4 demodulator.

Corresponding to FIG. 6, as shown in FIG. 8, an embodiment of this application further provides a schematic flowchart of another data transmission method. For a hybrid encoding scenario, the method includes the following steps.

Step 801: A second switching unit receives a to-be-sent data packet, determines a type of the to-be-sent data packet with reference to the foregoing Table 1, selects a modulation scheme based on the type of the data packet, and performs steps 802 and 803 when it is determined that hybrid modulation needs to be performed on the data packet. For processes of an NRZ modulation scheme and a PAM4 modulation scheme, refer to the descriptions in the foregoing embodiment. Details are not described herein again.

Step 802: The second switching unit splits the data packet into first data and second data, and sends the first data to an NRZ modulator.

A data packet splitting method is described in the foregoing embodiment. Details are not described in this embodiment again.

Step 803: The second switching unit sends the second data to a PAM4 modulator.

Step 804: The NRZ modulator modulates the first data to generate a modulated first data packet.

The modulated data packet carries the foregoing packet header structure, and includes a modulation type identifier, an NRZ length parameter, and a payload. The NRZ length parameter indicates a size of the first data.

Step 805: The PAM4 modulator modulates the second data to generate a modulated second data packet, and sends the second data packet to an error correction encoder.

Step 806: The error correction encoder performs error correction encoding on the second data packet, to add check data and generate a third data packet, and sends the third data packet to a first switching unit.

Step 707: The first switching unit combines the first data packet and the third data packet, and sends a combined data packet to a PAM4 sender.

Step 808: The PAM4 sender sends the combined data packet to a PAM4 receiver through a channel.

Step 809: The PAM4 receiver sends the data packet received from the channel to an analysis unit and a fourth switching unit.

Step 810: The analysis unit analyzes a packet header of the data packet, obtains a modulation type and an NRZ length parameter of the data packet, and notifies a third switching unit and the fourth switching unit of the modulation type and the NRZ length parameter.

Step 811: The fourth switching unit splits the received data packet into the first data packet and the third data packet based on the modulation type and the NRZ length parameter of the data packet, sends the first data packet to an NRZ demodulator, and sends the third data packet to an error correction decoder.

Step 812: An NRZ demodulator demodulates the received first data packet, and outputs the demodulated first data.

Step 813: The error correction decoder performs error correction decoding on the received third data packet, outputs the decoded data packet, and sends the decoded data packet to a PAM4 demodulator, and the PAM4 demodulator outputs the demodulated second data.

Step 814: The third switching unit receives the first data from the NRZ demodulator and the second data from the PAM4 demodulator, combines the first data and the second data based on the modulation type and the NRZ length parameter that are sent by the analysis unit, and outputs the original data packet, namely, the to-be-sent data packet in 801.

According to the data transmission method provided in this embodiment of this application, the modulation scheme may be freely switched without rebooting a system. In other words, a switching unit only needs to select, based on the type of the data packet, a path corresponding to an appropriate modulation scheme. In this way, fast switching of the modulation scheme is implemented. Further, when NRZ modulation is used in a low-delay scenario, a codec may be disabled in this embodiment of this application, to reduce system power consumption.

It should be noted that the NRZ modulation and the PAM4 modulation in the foregoing embodiments are merely specific examples. In embodiments of this application, the NRZ modulation is referred to as first modulation, and the PAM4 modulation is referred to as second modulation. The first modulation is a low-delay modulation scheme, and the second modulation is a high-bandwidth modulation scheme. It may be understood that the NRZ modulation may alternatively be replaced with another low-bit-error-rate modulation scheme, and the PAM4 modulation may alternatively be replaced with another high-bandwidth modulation scheme. For example, the NRZ modulation is replaced with a low-bit-error-rate PAM4 symbol sequence and low-delay FEC. In this way, a bandwidth of a low-delay part can be increased.

The system disclosed in embodiments of this application includes the first sending path and the second sending path that have the different performance indicators. The first switching unit selects the output of one of the sending paths based on the type of the to-be-transmitted data packet, and sends the output to the sender. In this way, when there is to-be-transmitted data of a plurality of different types, the output may be selected from the appropriate sending path by using the first switching unit without rebooting the data transmission system or performing link renegotiation, so that the hybrid transmission of the data packets of the plurality of types in the system is implemented.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. Abaseband data transmission system, comprising a first switching unit, a first sending path, a second sending path, and a sender, wherein the first sending path and the second sending path are disposed in parallel, and the first sending path and the second sending path have different performance indicators;

   the first sending path is configured to modulate a to-be-transmitted data packet, and sending a modulated output to the first switching unit;
   the second sending path is configured to modulate the to-be-transmitted data packet, and sending a modulated output to the first switching unit; and
   the first switching unit is configured to connect to the first sending path and the second sending path, and select the output of the first sending path or the second sending path based on a type of the to-be-transmitted data packet.

2. The data transmission system according to claim 1, wherein
   the first sending path and the second sending path are specifically configured to modulate the to-be-transmitted data packet, and output modulated data and modulation types.

3. The data transmission system according to claim 2, wherein the system further comprises a receiver, an analysis unit, a first receiving path, a second receiving path, and a third switching unit, wherein the first receiving path and the second receiving path are disposed in parallel;

the analysis unit is configured to receive an output from the receiver, extract the modulation type of the modulated data, and send the modulation type to the third switching unit;

the first receiving path and the second receiving path are configured to demodulate the modulated data; and

the third switching unit is configured to connect to the first receiving path and the second receiving path, and select an output of the first receiving path or the second receiving path based on the modulation type.

4. The data transmission system according to claim 1, wherein the performance indicator comprises at least one of the following: a delay, a bit error rate, a bandwidth, and power consumption.

5. The data transmission system according to any one of claims 1 to 4, wherein the system further comprises: a second switching unit, configured to receive the to-be-transmitted data packet, and select a sending path based on the type of the to-be-transmitted data packet.

6. The data transmission system according to claim 5, wherein

when the to-be-transmitted data packet is a short packet having a low-delay requirement, the first switching unit sends the to-be-transmitted data packet to the first sending path;

when the to-be-transmitted data packet is a long packet having a low-delay requirement, the first switching unit divides the data packet into first data and second data, sends the first data to the first sending path, and sends the second data to the second sending path; or

when the to-be-transmitted data packet is a data packet having a high-bandwidth requirement, and has no delay requirement, the first switching unit sends the to-be-transmitted data packet to the second sending path.

7. The data transmission system according to claim 6, wherein

a length m of the first data satisfies:

$$m < n + 2BR*T,$$

wherein

T is a codec delay, BR is a bitrate of a first modulator, and n is a quantity of bits of check data of an error correction encoder.

8. The data transmission system according to claim 3, wherein the system further comprises: a fourth switching unit, configured to receive the output of the receiver, and select a receiving path based on the modulation type.

9. The method according to any one of claims 1 to 8, wherein the first sending path comprises the first modulator, and the second sending path comprises a second modulator.

10. The data transmission system according to claim 9, wherein a bit error rate of the first modulator is less than a bit error rate of the second modulator, a delay of the first sending path is less than a delay of the second sending path, and a bandwidth of the second modulator is greater than a bandwidth of the first modulator.

11. The data transmission system according to claim 9 or 10, wherein a voltage difference between adjacent levels output by the first modulator is greater than a voltage difference between adjacent levels output by the second modulator.

12. The data transmission system according to any one of claims 9 to 11, wherein a level output by the first modulator is a subset of a level output by the second modulator.

13. The data transmission system according to any one of claims 9 to 12, wherein the first modulator is a non-return-to-zero NRZ modulator, the second modulator is a 4 pulse amplitude modulation PAM4 modulator, the sender is a PAM4 sender, and the receiver is a PAM4 receiver.

14. The data transmission system according to claim 13, wherein

a first demodulator on the first receiving path is an NRZ demodulator, and a second demodulator on the second receiving path is a PAM4 demodulator, wherein
the NRZ demodulator is configured to receive a data packet from the receiver, and output, with a granularity of two bits, a high-order bit in every two bits as a demodulation output result.

15. The data transmission system according to claim 1, wherein
a type parameter of the data packet comprises at least one of the following: a bandwidth parameter, a delay parameter, and a length parameter.

16. A baseband data transmission method, applied to a baseband data transmission system, wherein the system comprises a first switching unit, a first sending path, a second sending path, and a sender, the first sending path and the second sending path are disposed in parallel, and the first sending path and the second sending path have different performance indicators; and
the method comprises:

modulating, by the first sending path, a to-be-transmitted data packet, and sending a modulated output to the first switching unit;
modulating, by the second sending path, the to-be-transmitted data packet, and sending a modulated output to the first switching unit; and
connecting, by the first switching unit, to the first sending path and the second sending path, and selecting the output of the first sending path or the second sending path based on a type of the to-be-transmitted data packet.

17. The method according to claim 16, wherein the method further comprises:
modulating, by the first sending path and the second sending path, the to-be-transmitted data packet, and outputting modulated data and modulation types.

18. The method according to claim 17, wherein the system further comprises a receiver, an analysis unit, a first receiving path, a second receiving path, and a third switching unit, wherein the first receiving path and the second receiving path are disposed in parallel; and
the method further comprises:

receiving, by the analysis unit, an output from the receiver, extracting the modulation type of the modulated data, and sending the modulation type to the third switching unit;
demodulating, by the first receiving path and the second receiving path, the modulated data; and
connecting, by the third switching unit, to the first receiving path and the second receiving path, and selecting an output of the first receiving path or the second receiving path based on the modulation type.

19. The method according to any one of claims 16 to 18, wherein the system further comprises a second switching unit, and the method further comprises:
receiving, by the second switching unit, the to-be-transmitted data packet, and selecting a sending path based on the type of the to-be-transmitted data packet.

20. The method according to claim 19, wherein

when the to-be-transmitted data packet is a short packet having a low-delay requirement, the first switching unit sends the to-be-transmitted data packet to the first sending path;
when the to-be-transmitted data packet is a long packet having a low-delay requirement, the first switching unit divides the to-be-transmitted data packet into first data and second data, sends the first data to the first sending path, and sends the second data to the second sending path; or
when the to-be-transmitted data packet is a data packet having a high-bandwidth requirement, and has no delay requirement, the first switching unit sends the to-be-transmitted data packet to the second sending path.

21. The method according to claim 18, wherein the system further comprises a fourth switching unit, and the method further comprises:
receiving, by the fourth switching unit, the output of the receiver, and selecting a receiving path based on the modulation type.

FIG. 1

FIG. 2

FIG. 3

Restore to an
original data stream

NRZ
modulation

| Packet length 2T of a data packet |

Basic delay | Packet length 2T of the data packet |

Total delay of transmission

Time
difference

Restore to the
original data stream

| Packet length T
of the data packet |

PAM4
modulation

Basic delay | Encoding
delay | Packet length
T of the data
packet+check bit |

Decoding
delay

Total delay of transmission

Time t

FIG. 4

EP 4 262 160 A1

A to-be-sent data packet is divided into first data and second data

**Virtual NRZ modulation is used for the first data PAM4 modulation is used for the second data**

Sending side | First data (an NRZ packet with a packet length $2m_1$) | Second data (a PAM4 packet with a packet length $m_2$)

Receiving side | Basic delay | First data (the NRZ packet with the packet length $2m_1$) | Codec delay | Second data (a PAM4 packet with $m_2+n_2$)

Total delay of transmission

**The PAM4 modulation is used for data of a to-be-sent data stream**

Sending side | First data and second data (a PAM4 packet with a packet length $m_1+m_2$)

Receiving side | Basic delay | Codec delay | First data and second data (a PAM4 packet with $m_1+m_2+n_1+n_2$)

Total delay of transmission

**NRZ modulation is used for the data of the to-be-sent data stream**

Sending side | First data and second data (an NRZ packet with a packet length $2(m_1+m_2)$)

Receiving side | Basic delay | Second data (the NRZ packet with the packet length $2(m1_+m2_)$)

Total delay of transmission

Time t

FIG. 5

Perform switching based
on a type of a packet

Perform switching based
on the type of the packet

601

602

605

606

Sending
side

To-be-sent
data packet
00011011

Second switching unit

NRZ
modulator

00033033

First switching unit

Sender

603

604

0123

PAM4
modulator

Error correction
encoder

0123x

619

Analysis
unit

611

612

615

616

Receiving
side

Receiver

Fourth switching unit

00033033

NRZ
demodulator

Third switching unit

Restore to a
data stream
00011011

614

0123x

Error correction
decoder

0123

613

PAM4
demodulator

Perform switching based
on the type of the packet

Perform switching based
on the type of the packet

FIG. 6

EP 4 262 160 A1

| Second switching unit | NRZ modulator | PAM4 modulator | Error correction encoder | First switching unit | Sender | Receiver | Analysis unit | Fourth switching unit | NRZ decoder | PAM4 decoder | Error correction decoder | Third switching unit |

701: Select a modulation scheme

702: To-be-transmitted data packet

703: To-be-transmitted data packet

704: Modulated first data packet

705: Modulated second data packet

706: Third data packet obtained through error correction encoding

707: Select a sending path

708: Modulated data

709: Modulated data

710: Modulation type

711: Modulated data

712: Demodulated data packet

713: Demodulated data packet

714: Select a receiving channel and perform outputting

FIG. 7

EP 4 262 160 A1

| Second switching unit | NRZ modulator | PAM4 modulator | Error correction encoder | First switching unit | Sender | Receiver | Analysis unit | Fourth switching unit | NRZ decoder | PAM4 decoder | Error correction decoder | Third switching unit |
|---|---|---|---|---|---|---|---|---|---|---|---|---|

801: Select hybrid modulation

802: First data

803: Second data

804: Modulated first data packet

805: Modulated second data packet

806: Third data packet obtained through error correction encoding

807: Combined data packet

808: Combined data packet

809: Combined data packet

810: Modulation type and NRZ length parameter

811: First data packet

811: Third data packet

812: Demodulated first data

813: Demodulated second data

914: Combine and output the first data and the second data

FIG. 8

## INTERNATIONAL SEARCH REPORT

International application No.

**PCT/CN2021/141089**

### A. CLASSIFICATION OF SUBJECT MATTER

H04L 12/50(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC: 基带, 切换, 调制, 第二, 其他, 其它, 另一, 通路, 通道, 信道, 链路, 数据, 报文, 分组, 包, 信号, 种类, 类别, 类型, baseband, switch+, modulat+, second, other, another, channel, link, packet, signal, data, type

### C. DOCUMENTS CONSIDERED TO BE RELEVANT

| Category* | Citation of document, with indication, where appropriate, of the relevant passages | Relevant to claim No. |
|---|---|---|
| X | US 2002061753 A1 (LYSEJKO, Martin et al.) 23 May 2002 (2002-05-23) claims 1-25, description paragraphs [0037], [0069]-[0153] | 1-21 |
| A | CN 101848004 A (BROADCOM CORPORATION) 29 September 2010 (2010-09-29) entire document | 1-21 |
| A | WO 2018029993 A1 (SONY CORPORATION) 15 February 2018 (2018-02-15) entire document | 1-21 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 February 2022** | **01 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141089**

| Patent document cited in search report | | | Publication date (day/month/year) | Patent family member(s) | | | Publication date (day/month/year) |
|---|---|---|---|---|---|---|---|
| US | 2002061753 | A1 | 23 May 2002 | EP | 1321004 | A1 | 25 June 2003 |
| | | | | JP | 2004511146 | A | 08 April 2004 |
| | | | | WO | 0228131 | A1 | 04 April 2002 |
| CN | 101848004 | A | 29 September 2010 | US | 2013051440 | A1 | 28 February 2013 |
| | | | | US | 2012069879 | A1 | 22 March 2012 |
| | | | | US | 2010136927 | A1 | 03 June 2010 |
| | | | | EP | 2194649 | A2 | 09 June 2010 |
| WO | 2018029993 | A1 | 15 February 2018 | JP | 2018026626 | A | 15 February 2018 |
| | | | | US | 2021099999 | A1 | 01 April 2021 |
| | | | | EP | 3923508 | A1 | 15 December 2021 |
| | | | | EP | 3500013 | A1 | 19 June 2019 |
| | | | | US | 2019191437 | A1 | 20 June 2019 |
| | | | | CN | 109565813 | A | 02 April 2019 |

Form PCT/ISA/210 (patent family annex) (January 2015)